# EUROPEAN PATENT APPLICATION

(11) **EP 2 281 630 A1**
(43) Date of publication of application: **09.02.2011**
(21) Application number: 09010229.4
(22) Date of filing: 07.08.2009
(51) Int. Cl.: B01J 47/00, G01N 1/34, G01N 33/53

(54) **Sample clean-up device**

(71) Applicant: Labor Diagnostika Nord GmbH & Co. KG, 48531 Nordhorn (DE)
(72) Inventor: The designation of the inventor has not yet been filed
(74) Representative: Schnappauf, Georg

(57) **Abstract**

The present invention is in the field of sample preparation for analytical methods. In particular, the present invention provides a sample clean-up device and a method for preparing said sample clean-up device. The sample clean-up device is based on the principle of ion exchange chromatography and is preferably in the form of a multiwell plate to be applicable in a high throughput setting. The present invention further provides methods for purifying a sample using said sample clean-up device. Furthermore, a method for analyzing a sample for presence of an analyte comprising purifying the sample using the sample clean-up device of the invention and an analyte-specific detection assay are provided.

## Description

### TECHNICAL FIELD OF THE INVENTION

The invention is in the field of sample preparation for analytical applications, preferably in a high throughput setting. In particular, the present invention relates to a sample clean-up device, a method for its preparation, and methods for purifying and analyzing a sample using said sample clean-up device.

### BACKGROUND OF THE INVENTION

The reliability and reproducibility of analytical procedures are strongly dependent on the degree of complexity of the sample to be analyzed. In particular, biological samples which are generally inhomogeneous mixtures of many different components of different chemical and physical behavior are usually difficult to analyze. Thus, sample processing and purification steps are usually required before a sample is applied to the actual analytical method. Samples may be processed by lysis, centrifugation, and/or pre-purification of a certain class of compounds. Chromatography is a widely used technique for sample preparation and pre-purification. For example, ion exchange resins are packed into columns which are then used for chromatographic separation of small compounds such as peptides or amino acids from the sample. However, these columns are not suitable for quantitative high throughput assays, are expensive in their production, usually require ample sample volume, and are often time consuming and cumbersome in their use. Therefore, a sample clean-up device is needed which is suitable for quantitative high throughput assays, is cost-effective and easy in its production, which requires only a small sample volume and is easy and fast in its application.

The present invention provides a solution to the above problems by providing a sample clean-up device, wherein the ion exchange resin is attached to a solid support such as a multiwell plate using a glue composition. The sample clean-up device of the invention is much more cost-effective in its production than chromatography columns, is fast and easy in its use, and applicable in a high throughput setting.

### SUMMARY OF THE INVENTION

In a first aspect, the present invention provides a sample clean-up device comprising a solid support and an ion exchange resin, wherein the ion exchange resin is attached to the solid support with a glue composition.

In a second aspect, the present invention provides a method for preparing a sample clean-up device, said method comprising:
a) mixing ion exchange resin with a glue composition,
b) adding the mixture of a) to a solid support, and
c) drying the mixture of a) in the solid support.

In a preferred embodiment of the first and second aspect of the present invention, the solid support is in the form of a multiwell plate. Preferably, the glue composition comprises one or more adhesives and one or more solvents, preferably one or more organic solvents, wherein preferably the one or more solvents are inert. The one or more adhesives may be preferably selected from the group consisting of natural adhesives, synthetic monomer adhesives, and synthetic polymer adhesives, and in a particular preferred embodiment, the glue composition comprises an adhesive, chloroform, and acetone.

In a third aspect, the present invention provides a method for purifying a sample, said method comprising:
a) incubating the sample with the sample clean-up device of the first aspect of the present invention, and
b) collecting the bound material, the unbound material, or both from the sample clean-up device.

In a fourth aspect, the present invention provides a method for analyzing a sample for the presence of an analyte, said method comprising:
a) purifying the sample by the method of the third aspect of the present invention, and
b) applying the collected material to an analyte-specific detection assay.

In a preferred embodiment of the fourth aspect of the present invention, the analyte-specific detection assay is selected from the group consisting of immunoassay and nucleic acid detection method.

In a preferred embodiment of the third and fourth aspect of the present invention, the sample is a biological sample, preferably a bodily sample, an environmental sample, or a food sample, wherein preferably the bodily sample is a bodily fluid, a cell extract, or a tissue extract. More preferably the sample is plasma, serum, or urine, most preferably plasma or urine.

In a preferred embodiment of the fourth aspect of the present invention, the analyte is selected from the group consisting of hormones, neurotransmitters, enzymes, signaling molecules, receptor ligands, second messenger molecules, toxins, pathogen-specific molecules, metabolites, and coenzymes. The analyte may be any type of molecule or compound and is preferably selected from the group consisting of amino acids, metabolites of amino acids, biogenic amines, peptides, proteins, nucleobases, nucleosides, nucleotides, nucleic acids, saccharides, oligosaccharides, lipids, glycolipids, steroids, and derivatives thereof, and is most preferably γ-aminobutyric acid (GABA) or glutamate.

### BRIEF DESCRIPTION OF THE DRAWINGS

Figure 1: A sample clean-up device of the invention
   48-well plate coated with ion exchange resin DOWEX^{™} 50W using the method for preparing a sample clean-up device according to the present invention. Upper panel: entire 48-well plate; lower panel: 3x magnification; scale bars = 1 cm.
Figure 2: Comparison of GABA quantification using column extraction or the sample clean-up device of the present invention. 39 untimed urine samples were measured for GABA by the Column extraction assay and with the sample clean-up device assay.

### DETAILED DESCRIPTION OF THE INVENTION

Although the present invention is described in detail below, it is to be understood that this invention is not limited to the particular methodologies, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

In the following, the elements of the present invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine the explicitly described embodiments with any number of the disclosed and/or preferred elements. Furthermore, any permutations and combinations of all described elements in this application should be considered disclosed by the description of the present application unless the context indicates otherwise. For example, if in a preferred embodiment the adhesive of the glue composition is polyurethane and in another preferred embodiment the glue composition comprises two organic solvents, then it is a preferred embodiment of the present invention that the glue composition comprises polyurethane and two organic solvents.

Preferably, the terms used herein are defined as described in "A multilingual glossary of biotechnological terms: (IUPAC Recommendations)", H.G.W. Leuenberger, B. Nagel, and H. Kölbl, Eds., Helvetica Chimica Acta, CH-4010 Basel, Switzerland, (1995).

The practice of the present invention will employ, unless otherwise indicated, conventional methods of chemistry, biochemistry, cell biology, and immunoassays which are explained in the literature in the field (cf., e.g., Molecular Cloning: A Laboratory Manual, 2nd Edition, J. Sambrook et al. eds., Cold Spring Harbor Laboratory Press, Cold Spring Harbor 1989).

Throughout this specification and the claims which follow, unless the context requires otherwise, the word "comprise", and variations such as "comprises" and "comprising", will be understood to imply the inclusion of a stated member, integer or step or group of members, integers or steps but not the exclusion of any other member, integer or step or group of members, integers or steps. As used in this specification and the appended claims, the singular forms "a", "an", and "the" include plural referents, unless the content clearly dictates otherwise.

In the following, definitions of specific terms used in the present invention are given. These definitions are applicable for all aspects of the present invention.

A "sample clean-up device" in the context of the present invention is suitable for cleaning up, i.e., purifying a sample. Preferably, the sample clean-up device is used for cleaning up or purifying a sample before said sample is applied to an analytical method. Preferably, a sample is considered to be cleaned up or purified according to the present invention if after purification the compound to be analyzed, i.e., the analyte, is enriched relative to the other compounds in the sample by at least 10%, preferably at least 20%, preferably at least 30%, more preferably at least 40%, more preferably at least 50%, even more preferably at least 60%, even more preferably at least 70%, even more preferably at least 80%, and most preferably at least 90% when compared to the sample before purification/clean-up, i.e., before application of the sample to the sample clean-up device. This enrichment may be relative to all other compounds, i.e., all compounds that are not the analyte, present in the sample, or this enrichment may be relative to all other compounds of the same type. For example, if the analyte is a protein, the enrichment may be relative to all other proteins that are not the analyte, or relative to all compounds that are not the analyte, such as other proteins, lipids, saccharides, nucleic acids etc. In the context of the present invention, a sample clean-up device comprises a solid support and an ion exchange resin, wherein the ion exchange resin is attached to the solid support with a glue composition.

The term "solid support" in the context of the present invention is preferably an entity having at least one cavity or well that is made up of solid material such as plastics, metal, ceramics, or glass, preferably plastics or glass. In a preferred embodiment, the material of the solid support is selected from the group consisting of polystyrene, polypropylene, polycarbonate, polyvinyl chloride, cyclo-olefins, and glass, preferably the material of the solid support is polystyrene. The solid support may be any reaction vessel known to the skilled person. The one or more cavities of the solid support may hold any volume, for example, in the range of 1 µl to 100 L, preferably in the range of 1 µl to 10 L, more preferably in the range of 1 µl to 1 L, even more preferably in the range of 1 µl to 100 ml, even more preferably in the range of 1 µl to 10 ml, even more preferably in the range of 10 µl to 2 ml and most preferably in the range of 10 µl to 1 ml, e.g., 10, 20, 30, 40, 50 60, 70, 80, 90, 100, 200, 300, 400, 500, 600, 700, 800, 900, or 1000 µl. In a preferred embodiment, the solid support has more than one cavity, preferably more than 5 cavities, preferably more than 10 cavities, preferably more than 20 cavities, more preferably more than 50 cavities, more preferably more than 100 cavities. In particularly preferred embodiments, the solid support has 6, 12, 24, 48, 96, or 384 cavities, preferably holding a volume as described above. In a most preferred embodiment, the solid support is a multiwell plate, for example, a 6-, 12-, 24-, 48-, 96-, or 384-well plate, preferably a 48- or 96-well plate. Generally, one well of a 6-well plate may hold a maximal volume of between 2 and 5 ml, one well of a 12-well plate may hold a maximal volume of between 2 and 4 ml, one well of a 24-well plate may hold a maximal volume of between 1 to 3 ml, one well of a 48-well plate may hold a maximal volume of between 0.5 to 2 ml, one well of a 96-well plate may hold a maximal volume of between 300 µl to 1 ml, and one well of a 384-well plate may hold a maximal volume of between 30 µl and 100 µl. The cavities of the multiwell plate may have any form and are preferably flat-bottom or round-bottom wells, most preferably flat bottom wells.

The term "ion exchange resin" or "resin" in the context of the present invention may be any ion exchange resin that is known to the skilled person independent of the functional groups or the matrix material. In a preferred embodiment, the matrix of the ion exchange resin is selected from the group consisting of styrene divinylbenzene copolymer, acrylic copolymer, methacryl copolymer, and formophenolic copolymer, preferably is selected from the group consisting of styrene divinylbenzene copolymer, acrylic divinylbenzene copolymer, polyacrylate, methacryl divinylbenzene copolymer, and formophenolic copolymer, and is most preferably a microporous copolymer of styrene and divinylbenzene such as the DOWEX^{™} fine mesh ion exchange resins available from Dow Chemical Company or comparable ion exchange resins. Preferably, the ion exchange resin is a commercially available ion exchange resin. Preferred ion exchange resins are, for example, available from Dow Chemical Company (Dowex^{™} resins), Rohm and Haas (Amberlite^{™} resins), and Lanxess (Lewatit^{®} resins), and most preferably are the Dowex^{™} resins. The ion exchange resins may comprise any functional groups, such as weak or strong acids or weak or strong bases. For example, sulfonic acid groups may be used as strongly acidic functional groups (e.g., sodium polystyrene sulfonate or poly(2-acrylamido-2-methyl-1-propanesulfonic acid), also known as polyAMPS), quaternary amino groups such as trimethylammonium groups may be used as strongly basic groups (e.g., poly(acrylamido-N-propyltrimethylammonium chloride), also known as polyAPTAC), carboxylic acid groups may be used as weakly acidic groups, and primary, secondary, and/or ternary amino groups may be used as weakly basic groups (e.g., polyethylene amine).

The term "glue composition" in the context of all aspects of the present invention means a composition comprising one or more adhesives and one or more solvents, preferably comprising one adhesive and one or more solvents, preferably comprising one adhesive and more than one solvents. Preferably, the one or more solvents are one or more organic solvents. The glue composition is used in the context of the present invention for attaching an ion exchange resin to a solid support. In a most preferred embodiment of all aspects of the present invention, the glue composition does not significantly influence the ion exchange characteristics of the ion exchange resin, wherein "not significantly" preferably means that the ion exchange performance of the ion exchange resin in presence of the glue composition, preferably in presence of dried/cured glue composition, is not less than 30%, preferably not less than 40%, more preferably not less than 50%, even more preferably not less than 60%, and most preferably not less than 70% of the ion exchange performance of the ion exchange resin without glue composition. Preferably, the glue composition in the context of the present invention does not disintegrate the material of the solid support and/or the ion exchange resin, which means that the glue composition can be incubated with the solid support and/or the ion exchange resin for a certain period of time such as one to several hours and the solid support and/or the ion exchange resin is not noticeably affected by the contact with the glue composition, for example, the ion exchange resin and/or the surface of the solid support is not dissolved by the glue composition. This means that the type and the amount/concentration of the one or more adhesives and/or the one or more solvents, preferably the one or more organic solvents, in the glue composition are selected such that the glue composition does not disintegrate the solid support and/or the ion exchange resin. The volume ratio of adhesives to solvents in the glue composition used in the present invention may be, for example, in the range of 1:100 to 100:1, preferably 1:50 to 50:1, preferably 1:25 to 25:1, preferably 1:10 to 10:1. More preferably, the volume ratio of adhesives to organic solvents is in the range of 1:100 to 1:1, more preferably, in the range of 1:50 to 1:5, even more preferably in the range of 1:25 to 1:10, for example, 1:25, 1:20, 1:15, or 1:10. It is particularly preferred that the volume ratio of adhesives to solvents in the glue composition used in the present invention is 1:10.

The terms "glue" and "adhesive" are used interchangeably according to the present invention. These terms encompass any materials, compounds, substances, chemicals, or mixtures of materials, compounds, substances, or chemicals that have the ability to bond items together. In the context of the present invention, the terms "glue" and "adhesive" also encompass materials, compounds, substances, chemicals, or mixtures of materials, compounds, substances, or chemicals which require modification to have the ability to bond items together, for example, which have to be modified by chemical or physical treatment/processing, such as heating or application of pressure etc., or which have to be combined with one or more other materials, compounds, substances, chemicals in order to acquire adhesive properties. The skilled person is well aware which compounds exhibit adhesive characteristics by themselves and which compounds need to be modified or combined with another compound in order to acquire adhesive properties. In the context of the present invention, the terms "glue" and "adhesive" also encompass commercially available glues, adhesives, glue compositions, or adhesive compositions. For example, the commercially available glue with the trade name Pattex^{®} All-Purpose Adhesive from Henkel is based on an acrylate copolymer dispersion and is also a "glue" or "adhesive" in the context of the present invention. Other examples are the commercially available glues with the trade names Pattex^{®} My Glue and Pattex^{®} Transparent, also available from Henkel, which are based on an aqueous solution of a linear anionic polyurethane. Thus, in the context of the present invention, the term "adhesive" includes the commercially available glues Pattex^{®} My Glue and Pattex^{®} Transparent. Pattex^{®} Transparent (PXT) is a particularly preferred adhesive/glue in the context of the present invention.

The glue or adhesive in the context of the present invention may be selected from the group consisting of natural adhesives, synthetic adhesives, drying adhesives, contact adhesives, hot adhesives, emulsion adhesives, and UV and light curing adhesives.

In the context of the present invention, the glue or adhesive may be derived from a natural source, for example, from animals, plants, or microorganisms. Examples for natural adhesives/glues are albumin glues, bone glues, casein glues, fish glues, hoof glues, meat glues, skin glues (for example, rabbit skin glue), Canada balsam, Gum Arabic, latex, library paste (a starch-based glue), mucilage, resorcinol resins, and urea-formaldehyde resins.

The glue or adhesive used in the present invention may also be derived from a synthetic source, for example, glues or adhesives in the context of the present invention may be or may be based on elastomers, thermoplastics, emulsions, or thermosetting adhesives. Examples for synthetic compounds which are adhesives or glues in the context of the present invention or on which adhesives or glues in the context of the present invention may be based are polyisoprene, butyl rubber (copolymer of isobutylene and isoprene), polybutadiene, styrenebutadiene rubber (copolymer of polystyrene and polybutadiene), nitrile rubber (copolymer of polybutadiene and acrylonitrile), chloroprene rubber, ethylene propylene rubber, epichlorohydrin rubber, polyacrylic rubber, silicone rubber, fluorosilicone rubber, fluoroelastomers, perfluoroelastomers, polyether block amides, polyethylene, chlorosulfonated polyethylene, ethylene-vinyl acetate, thermoplastic elastomers (for example, Elastron^{®}), thermoplastic vulcanizates (for example, Santoprene^{®}), polyurethane, thermoplastic olefins, polysulfide rubber, acrylonitrile butadiene styrene, acrylic (PMMA), celluloid, cellulose acetate, ethylene vinyl alcohol, fluoroplastics, ionomers, polyacetal, polyacrylates, polyacrylonitrile, acrylonitrile, polyamide, polyamide-imide, polyaryletherketone, polybutylene, polybutylene terephthalate, polycaprolactone, polychlorotrifluoroethylene, polyethylene terephthalate, polycyclohexylene dimethylene terephthalate, polycarbonate, polyhydroxyalkanoates, polyketone, polyester, polyetheretherketone, polyetherketoneketone, polyetherimide, polyethersulfone, polyethylenechlorinates, polyimide, polylactic acid, polymethylpentene, polyphenylene oxide, polyphenylene sulfide, polyphthalamide, polypropylene, polystyrene, polysulfone, polytrimethyl terephthalate, polyurethane, polyvinyl acetate, polyvinyl chloride, polyvinylidene chloride, styrene acrylonitrile, polystyrene cement/Botanon, cyanoacrylate ("Superglue", "Krazy Glue"), epoxy resins, phenol formaldehyde resin, polyvinylpyrrolidone, rubber cement, silicones, and styrene acrylic copolymer.

Preferably, the one or more adhesives are selected from the group consisting of natural adhesives, synthetic monomer adhesives, and synthetic polymer adhesives, preferably the one or more adhesives are synthetic monomer adhesives or synthetic polymer adhesives. In a preferred embodiment, the synthetic monomer adhesive may be or may be based on a compound selected from the group consisting of acrylonitrile, methacrylate, and acrylate, preferably cyanoacrylate. The synthetic polymer adhesive may be or may be based on a compound selected from the group consisting of acrylic copolymer, preferably styrene acrylic copolymer, epoxy resin, ethylene-vinyl acetate, methacrylic copolymer, phenol formaldehyde resin, polyacrylate, polymethacrylate, polyurethane, preferably linear anionic polyurethane, polyamide, polyester, polyvinyl acetate, polyvinylpyrrolidone, polyethylene, polysulfide, polypropylene, polyvinylchloride, rubber cement, silicone, styrene butadiene copolymer, polychloroprene, and urea formaldehyde resin. Preferably, the one or more adhesives are or are based on a compound selected from the group consisting of epoxy resin, polyurethane, preferably linear anionic polyurethane, acrylate copolymer, preferably styrene acrylate copolymer, and methacrylate. Most preferably, the adhesive in the context of the present invention is or is based on linear anionic polyurethane.

The term "solvent" in the context of the present invention refers to any solvent known to the skilled person. The one or more solvents used for the glue composition in the context of the present invention are preferably selected such that the one or more adhesives are soluble in the one or more solvents. The solvents may be inorganic, such as water or water-based solvents, they may be organic, or a mixture of inorganic and organic solvents. Preferably the one or more solvents in the context of the present invention are one or more organic solvents. The one or more solvents used in the context of the present invention are preferably inert. The term "inert" in this context means that the solvent in the amount/concentration used in the glue composition does not significantly react chemically with the ion exchange resin and/or the solid support. Thus, in the context of the present invention, the type and amount/concentration of the one or more solvents, preferably the one or more organic solvents, are selected such that the material of the solid support is not disintegrated, which means that material of the solid support is stable for a certain period of time when in contact with the one or more solvents, preferably the one or more organic solvents, at the concentration used for the glue composition, for example, the material is stable for at least 0.5, preferably at least 1, more preferably at least 5, even more preferably for at least 20 or more hours. For example, the term means that the material of the solid support is not dissolved in the one or more solvents, preferably in the one or more organic solvents, at the concentration used for the glue composition. The type and amount/concentration of the one or more adhesives and/or one or more organic solvents used for the glue composition according to the present invention is dependent on the material of the solid support and the material of the ion exchange resin. It is known in the field which adhesives and/or organic solvents are compatible with which material.

Preferably, the one or more organic solvents used for the glue composition according to the present invention are selected from the group consisting of apolar organic solvents, polar organic solvents, aprotic organic solvents, and combinations thereof, for example, apolar aprotic organic solvents or polar aprotic organic solvents. For example, the one or more organic solvents may be selected from the group consisting of hexane, benzene, toluene, dimethyl ether, diethyl ether, methyl acetate, ethyl acetate, methyl ethyl ketone, 1,4-dioxane, tetrahydrofuran, chloroform, dichloromethane, carbon tetrachloride, acetone, acetonitrile, dimethyl formamide, dimethyl sulfoxide, methanol, and ethanol, preferably the one or more organic solvents are selected from the group consisting of dimethyl ether, diethyl ether, chloroform, ethyl acetate, tetrahydrofuran, dichloromethane, carbon tetrachloride, acetone, acetonitrile, methanol, and ethanol. In a most preferred embodiment, the glue composition comprises two organic solvents, for example, dimethyl ether and tetrahydrofuran, dimethyl ether and dichloromethane, dimethyl ether and acetone, dimethyl ether and acetonitrile, diethyl ether and tetrahydrofuran, diethyl ether and dichloromethane, diethyl ether and acetone, diethyl ether and acetonitrile, chloroform and tetrahydrofuran, chloroform and dichloromethane, chloroform and acetone, chloroform and acetonitrile, ethyl acetate and tetrahydrofuran, ethyl acetate and dichloromethane, ethyl acetate and acetone, or ethyl acetate and acetonitrile, preferably the two organic solvents are chloroform and tetrahydrofuran, chloroform and dichloromethane, chloroform and acetone, chloroform and acetonitrile, dimethyl ether and acetone, diethyl ether and acetone, or ethyl acetate and acetone, and most preferably the two organic solvents of the glue composition are chloroform and acetone.

The term "sample" in the context of the present invention refers to any material that may be solid, semi-solid, highly viscous, or liquid which is to be tested for presence or absence of one or more analytes, e.g., a certain compound, chemical, substance, or organism such as a virus, bacterium, or parasite. A sample may be any material that is suspected of comprising the one or more analytes. According to the present invention, the sample is preferably liquid or if the sample is solid, semi-solid, or highly viscous it is processed such that the sample is liquefied. The sample may be a biological sample or a synthetic sample. The sample may be an aqueous solution or suspension or the sample may be based on one or more organic solvents. If the sample is aqueous, it is preferred that the adhesive used for the glue composition to attach the ion exchange resin to the solid support is not soluble in water. If the sample is based on one or more organic solvents, it is preferred that the adhesive used for the glue composition to attach the ion exchange resin to the solid support is not soluble in the one or more organic solvents the sample is based on.

A synthetic sample may be derived from a chemical synthesis process, for example, if the presence or absence of a certain product, by-product, or intermediate product of a reaction is to be tested at certain stages of the reaction, a sample is taken at the said stage of the reaction. Said sample may then be applied to the methods according to the present invention.

A biological sample may be an environmental sample, a food sample, or it may be derived from an organism or an individual, i.e., a biological sample may be a bodily sample. The individual may be an animal, for example, a mammal, e.g., mouse, rat, rabbit, cat, dog, pig, cow, horse, non-human primate, or a human. The individual may be an animal patient, preferably a human patient.

An environmental sample may be a soil sample, a sample of plants, a water sample, preferably a sample of drinking water, sewage water (for example, from a house hold, a sewage plant, or chemical industry), water of a river, a lake, the sea, rain water, water of a swimming pool etc. The sample may be for determining whether an environmental sample contains toxins, pollutants, or certain microorganisms such as pathogens.

A food sample in the context of the present invention is preferably liquid or if it is solid the sample is preferably processed to become liquid, preferably an extract is prepared from the solid sample. A food sample may be analyzed, for example, for toxins or microorganisms such as pathogens or putrefactive agents.

In a preferred embodiment, the sample is a bodily sample, for example, a bodily fluid, a cell sample, or a tissue sample, wherein if the sample is a cell or tissue sample, the sample is preferably lysed and processed to a cell extract or tissue extract. A bodily fluid may be preferably selected from the group consisting of blood, blood plasma, interstitial fluid, liquor, lymph, breast milk, mucus, pleural fluid, pus, saliva, semen, serum, sputum, sweat, tear fluid, urine, vaginal secretion, vomit, gastric aspirate, endotracheal aspirate, transtracheal aspirate, bronchoalveolar lavage, laryngeal swab, and nasopharyngeal swab. A bodily sample may be, for example, used for diagnosing a disease or disease condition in a patient.

The term "processing" in the context of the present invention refers in general to every treatment that comprises a change in one or more physical properties of a sample being processed when said physical property/properties is/are determined before and after the treatment/processing. Preferably, "processing" in the sense of the present invention comprises liquefaction of a sample such that the viscosity of the sample is reduced by the processing procedure. It is particularly preferred that "processing" comprises lysis of the sample, meaning the disintegration of cells present in the sample. Such cells may be prokaryotic or eukaryotic cells, for example, bacterial cells, yeast cells, fungal cells, animal cells, mammalian cells etc. The term "liquefaction" in the context of the present invention means that a solid, semi-solid, or highly viscous sample is processed to become liquid, i.e., that the viscosity of a sample before liquefaction is higher, preferably at least 2-fold higher compared to the viscosity after liquefaction. Preferably, the viscosity of the sample is at least 3-fold higher before liquefaction compared to the viscosity after liquefaction. More preferably, the viscosity of the sample is at least 5-fold, most preferably at least 10-fold higher before liquefaction compared to the viscosity after liquefaction.

An "analyte" in the context of the present invention may be any substance for which a sample is analyzed. For example, environmental and food samples may be analyzed for environmental toxins, e.g., pesticides, pollutants, contamination with microorganisms, hormones, putrefactive agents etc., a bodily sample may be analyzed for a pathogen, e.g., for pathogen-specific structures, such as pathogen-specific surface markers, disease-specific structures, such as cancer-specific proteins, or hormones, neurotransmitters, enzymes, signaling molecules, receptor ligands, second messenger molecules, toxins, metabolites, or coenzymes etc. If the analyte is a pathogen or a microorganism, it is preferred that the sample is lysed before the analysis is performed to disintegrate the pathogen and/or microorganism. Thus, the analyte may be selected, for example, from the group consisting of hormones, neurotransmitters, enzymes, signaling molecules, receptor ligands, second messenger molecules, toxins, pathogen-specific molecules, metabolites, or coenzymes etc. The analyte may be any type of biochemical or chemical compound, for example, the analyte may be, for example, selected from the group consisting of amino acids, metabolites of amino acids, biogenic amines, peptides, proteins, nucleobases, nucleosides, nucleotides, nucleic acids, saccharides, oligosaccharides, lipids, glycolipids, steroids etc., and derivatives thereof, and is preferably an amino acid or a derivative thereof. Preferably, the analyte is γ-aminobutyric acid (GABA) or glutamate.

An "analyte-specific detection assay" refers to any assay that is capable of specifically detecting a certain analyte, preferably with adequate sensitivity, i.e., with an adequate detection limit. The detection limit of an analytical method is the lowest quantity of analyte that can be distinguished from the absence of that substance (a reference, i.e., blank value) within a confidence limit. The "adequate sensitivity" or "adequate detection limit" is dependent on the type of analyte and sample. For example, if drinking water is to be analyzed for highly toxic substances or highly pathogenic organisms, the detection assay should be highly sensitive, for example, one such highly pathogenic organism per milliliter of drinking water should preferably be detectable by the assay used. The analyte-specific detection assay may provide a yes-no-answer on whether the analyte is present or absent in a sample. The analyte is considered present in a sample if the analyte-specific detection assay shows a positive read-out, whereas a negative control in the same assay does not provide a signal. The skilled person is well aware that detection assays are restricted by their detection limit. A highly sensitive assay will therefore provide a positive result even if there is only miniscule amount of analyte present in the sample. In a preferred embodiment, the analyte-specific detection assay can be used to quantify the analyte present in a sample. The quantification may be relative or absolute. Thus, in the context of the present invention, the term "detection" also comprises the quantitative determination of an analyte. The type of detection assay is dependent on the type of analyte. For example, if the analyte is a protein, the analyte-specific detection assay must be able to detect proteins, preferably specifically. For example, a protein may be detected using an immunoassay such as Western blot, enzyme immunoassay (EIA), or enzyme-linked immunosorbent assay (ELISA). If the analyte is a nucleic acid, the analyte-specific detection assay is a nucleic acid detection method. The analyte-specific detection assay may also be any other analytical method such as methods applied in analytical chemistry, preferably in bioanalytical chemistry. Such methods may include spectroscopy, mass spectrometry, chromatography, such as gas chromatography, crystallography, or nuclear magnetic resonance analyses etc.

An "immunoassay" is any assay which involves the use of antibodies or antibody fragments. For example, Western blot analysis, EIA, ELISA, or radioimmunoassay (RIA) are considered immunoassays. These assays are well known in the field.

A "nucleic acid detection method" in the context of the present invention is any molecular biological technique that is suitable to specifically detect nucleic acids. Such method may be based on sequence-specific nucleic acid amplification. "Nucleic acid amplification" in the context of the present invention refers to any molecular biological technique that is suitable for amplifying, i.e., multiplying, a nucleic acid, wherein the amplification may be linear or exponential. Examples for nucleic acid amplification methods are polymerase chain reaction (PCR), nucleic acid sequence-based amplification (NASBA), ligase chain reaction (LCR), strand displacement amplification (SDA), multiple displacement amplification (MDA), Q-beta replicase amplification, and loop-mediated isothermal amplification. Preferably, the amplification method is specific for a certain nucleic acid such as a specific gene or a fragment thereof. For example, the skilled person may design oligonucleotide primers which specifically hybridize to the nucleic acid of interest and use these primers in a PCR experiment. The skilled person is well aware of how to design oligonucleotide primers which specifically hybridize to the nucleic acid of interest. The detection and/or identification may also be achieved without amplification, for example, by sequencing the nucleic acid to be analyzed or by sequence specific hybridization, for example, in the context of a microarray experiment, Southern or Northern blot experiments. Sequencing techniques and microarray based analyses as well as Sothern and Northern blot experiments are well known procedures in the field.

The term "nucleotide" refers to structures composed of a nucleobase, a five-carbon sugar, and one to three phosphate groups. In the context of the present invention, the nucleobases may be adenine, guanine, thymine, cytosine, uracil, and derivatives thereof. Nucleotides may be noncyclic our cyclic, such as cyclic guanosine monophosphate or cyclic adenosine monophosphate. They may also be incorporated into cofactors of enzymatic reactions such as coenzyme A, flavin adenine dinucleotide, flavin mononucleotide, and nicotinamide adenine dinucleotide phosphate.

The term "nucleic acid" refers to a macromolecule of chains of monomeric nucleotides, for example, DNA, such as genomic DNA or cDNA, or RNA, such as messenger RNA (mRNA), ribosomal RNA (rRNA), transfer RNA (tRNA), short interfering RNA (siRNA), micro RNA (miRNA) etc.

According to the present invention, the term "amino acid" refers to any amino acid whether naturally occurring or synthetically generated. The term encompasses α-, β-, and γ-amino acids, proteinogenic as well as non-proteinogenic amino acids, and their derivatives. Examples for non-proteinogenic amino acids are thyroxine, γ-aminobutyric acid (GABA), L-homoserine, ornithine, citrulline, argininosuccinate, L-3,4-dihydroxyphenylalanine (L-DOPA), 5-hydroxytryptophan, beta-alanine, beta-methylamino-alanine, ibotenic acid, D-valine, D-alanine, and D-glutamate.

According to the present invention, the term "peptide" comprises oligo- and polypeptides and refers to substances comprising two or more, preferably three or more, preferably four or more, preferably six or more, preferably eight or more, preferably ten or more, preferably 14 or more, preferably 16 or more, preferably 21 or more and up to preferably 8, 10, 20, 30, 40, or 50, in particular 100 amino acids joint covalently by peptide bonds. The term "protein" refers to large peptides, preferably to peptides with more than 100 amino acid residues, but in general the terms "peptides" and "proteins" are synonymous and are used interchangeably herein.

In the following, the aspects of the present invention will be described in detail.

In a first aspect, the present invention provides a sample clean-up device comprising a solid support and an ion exchange resin, wherein the ion exchange resin is attached to the solid support with a glue composition. The solid support is as described above and is preferably a multiwell plate. The resin may be attached to the entire surface of the solid support, to the entire surface of the cavity/cavities or well(s) of the solid support, or only to a portion of the surface of the cavity/cavities or well(s) of the solid support, for example, the resin may be attached to 10%, 20%, 30%, 40%, 50%, 60%, 70%, 80%, 90%, or 100% of the surface of the cavity/cavities or well(s) of the solid support. The ion exchange resin may also be a mixture of ion exchange resins. In one embodiment, if the solid support is a multiwell plate, the ion exchange resin may be attached to all of the cavities/wells of the solid support or only to a portion of the cavities/wells of the solid support. Different cavities/well of the solid support may contain different ion exchange resins or mixtures of ion exchange resins. For example, a multiwell plate may have in each line or row a different type of ion exchange resin, for example, with different functional groups. The ion exchange resin is preferably activated. The sample clean-up device is preferably suitable for purifying analytes from biological samples such as bodily samples, e.g., plasma, serum, or urine samples, environmental samples, or food samples.

The glue composition is as defined above and as described in the second aspect of the present invention.

In a second aspect, the present invention provides a method for preparing a sample clean-up device, said method comprising:
a) mixing ion exchange resin with a glue composition,
b) adding the mixture of a) to a solid support, and
c) drying the mixture of a) in the solid support.

Preferably, the second aspect of the present invention provides a method for preparing the sample clean-up device of the first aspect of the present invention. Step a) may be performed in a reaction vessel, for example, a glass flask. For example, the ion exchange resin may be added to the glass flask and the glue composition may be added to the glass flask, and the mixture is preferably stirred, e.g., for 1 to 10 minutes, for example, for 1, 2, 3, 4, 5, 6, 7, 8, 9, or 10 minutes before step b). The volume ratio of ion exchange resin to glue composition may be between 1:100 and 100:1, preferably between 1:50 and 50:1, more preferably between 1:10 and 10:1, more preferably between 2:1 and 10:1, for example, the volume ratio of ion exchange resin to glue composition may be about 2:1, 3:1, 4:1, 5:1, 6:1, 7:1, 8:1, 9:1, or 10:1. It is particularly preferred that the volume ratio of ion exchange resin to glue composition is 10:1. The volume of mixture that is added to the solid support in step b) is dependent on the type of solid support, in particular, on the volume of the cavity/cavities present in the solid support. Preferably, the volume is chosen such that the bottom of the solid support or the cavity/cavities of the solid support is covered with the mixture, i.e., that the mixture forms a film on the bottom of the solid support or the cavity/cavities. For example, if the solid support is in the form of a 48- or 96-well plate, preferably, the thickness of the film is at least 0.5 mm, more preferably at least 1 mm, most preferably at least 1.5 mm. It is particularly preferred that the film thickness is maximally 2 mm. Thus, it is preferred that the film has a thickness of between about 0.5 and 2 mm.

Step c) may be performed at room temperature, for example, overnight. It may also be performed at an elevated temperature to accelerate the drying procedure. The temperature is then chosen such that the ion exchange resin is not significantly affected in its ion exchange performance. Thus, the temperature chosen for drying is dependent on the type of resin matrix material, based on which the skilled person is readily able to determine an appropriate drying temperature. For example, the drying temperature may be in the range of 5°C to 100°C, preferably in the range of 5°C to 60°C, preferably in the range of 10°C to 50°C, more preferably in the range of 15°C to 40°C, and most preferably between 20°C and 40°C, for example, the drying temperature may be about 20°C, about 25°C, about 30°C, about 35°C, or about 40°C. Preferably, the drying is performed at a temperature in the range of 20 to 25°C overnight.

In a preferred embodiment, the method further comprises the step of washing the solid support after step c). The washing solution may be dependent on the type of ion exchange resin (cation or anion exchange resin), the glue composition, and the analyte that is to be tested with the sample clean-up device. Preferably, the washing solution contains ions which are capable of activating the resin. For example, the washing solution may contain sodium ions, potassium ions, and/or lithium ions etc., such as sodium chloride, sodium hydroxide, sodium carbonate, sodium phosphate, sodium acetate, potassium chloride, potassium hydroxide, potassium carbonate, potassium phosphate, potassium acetate, lithium chloride, lithium hydroxide, lithium carbonate, lithium phosphate, or lithium acetate solutions, preferably having a concentration of between 0.05 M and 2 M, more preferably between 0.1 M and 1.5 M, even more preferably between 0.25 M and 1 M, and most preferably the concentration is 0.5 M. For example, if the analyte is GABA the solid support is preferably washed with a sodium ion containing solution, such as a sodium chloride, sodium hydroxide, sodium carbonate, sodium phosphate, or sodium acetate solution, most preferably a sodium chloride solution having a concentration as set forth above. The solid support is preferably incubated with the washing solution on a shaker, for example, for 5 to 15 minutes. The washing may be performed 1, 2, 3, 4, 5, or more times, preferably at least once. After the optional washing step with, for example, a salt solution such as a sodium chloride solution, the solid support is preferably washed with distilled water at least once, for example, 1, 2, 3, 4, 5, or more times, preferably 2 times. The washing step with distilled water may be a short rinse or preferably the solid support is incubated with the distilled water on a shaker for 5 to 15 minutes, for example, for 5, 10, or 15 minutes.

In a preferred embodiment, the solid support is dried after washing it. This drying step may be performed as described above for step c). Preferably, the solid support is dried overnight at room temperature.

In a preferred embodiment, the method according to the second aspect of the present invention further comprises the step of activating the ion exchange resin. The activation step may be before or after any step of the method according to the second aspect, preferably the activation step is performed before step a) or after step c), most preferably before step a). The activation step may also be performed after or during the optional washing step(s) or after the optional drying step described above. For example, if necessary, the ion exchange resin may be first dried until the weight is stable, i.e., until all water present in the resin is evaporated. The drying may be performed as described above for the drying step(s) of the solid support. Then, for example, acidic cation exchange resins such as the strong acidic cation exchange resins DOWEX^{™} 50W (X2, X4, or X8) available from Dow Chemical Company may be activated by washing with sodium ion, potassium ion, and/or lithium ion containing solutions, such as sodium chloride, sodium hydroxide, sodium carbonate, sodium phosphate, sodium acetate, potassium chloride, potassium hydroxide, potassium carbonate, potassium phosphate, potassium acetate, lithium chloride, lithium hydroxide, lithium carbonate, lithium phosphate, or lithium acetate solutions, e.g., having a concentration in the range of 0.2 M to 2.5 M, preferable in the range of 0.5 M to 1.5 M, most preferably in the range of 0.8 M to 1.2 M, for example, with a 1 M sodium hydroxide solution. The washing step is preferably at least performed until the resin is completely saturated with the washing solution. After washing with a washing solution, e.g., sodium hydroxide solution, the resin is preferably washed with distilled water, preferably until the pH of the distilled water used for washing the resin is neutral. Then, the resin is optionally filtered under vacuum and preferably dried again until a certain weight percentage of water is reached, for example, a weight percentage of water in the range of 15% to 70%, more preferably in the range of 30% to 65%, even more preferably in the range of 40 to 60%, most preferably in the range of 50 to 55%. It is particularly preferred that the activation solution contains the same ion for activating the ion exchange resin as the washing solution. For example, if the ion exchange resin is DOWEX^{™} 50W and the activating solution contains sodium ions, it is preferred that the washing solution also contains sodium ions, independently of the counter ion. Thus, the activating solution may be, for example, a sodium hydroxide solution and the washing solution may be, for example, a sodium chloride solution.

In a preferred embodiment of the first and second aspects of the present invention, the glue composition comprises one or more, e.g., 1, 2, 3, 4, 5, 6, or more, adhesives and one or more, e.g., 1, 2, 3, 4, 5, 6, or more, preferably 2, solvents, preferably one or more, e.g., 1, 2, 3, 4, 5, 6, or more organic solvents as described above. It is most preferred that the type and amount/concentration of the one or more solvents, preferably the one or more organic solvents, and the type and amount/concentration of the one or more adhesives are selected such that the material of the solid support and the ion exchange resin is not disintegrated.

In a particularly preferred embodiment of the sample clean-up device according to the first aspect of the present invention and the method according to the second aspect of the present invention, the glue composition comprises, preferably essentially consists, preferably consists of an adhesive, chloroform, and acetone, and most preferably comprises, preferably essentially consists, preferably consists of Pattex^{®}, preferably comprising a linear anionic polyurethane such as Pattex^{®} Transparent (PXT) or Pattex^{®} My Glue,chloroform, and acetone. Most preferably, the glue composition comprises, preferably essentially consists, preferably consists of the adhesive, chloroform, and acetone in a volume ratio of 1:2-3: 5-9, preferably in a volume ratio of 1 : 2.5 : 7.

In another aspect, the present invention provides a sample clean-up device obtainable by the method according to the second aspect of the present invention. Preferably said sample clean-up device is obtained by the method according to the second aspect of the present invention.

In a third aspect, the present invention provides a method for purifying a sample, said method comprising:
a) incubating the sample with the sample clean-up device of the first aspect of the present invention or with a sample clean-up device obtainable by or obtained by the method of the second aspect of the present invention, and
b) collecting the bound material, the unbound material, or both from the sample clean-up device.

The sample clean-up device in step a) may also be any sample clean-up device that can be produced by the method according to the second aspect of the present invention. The sample clean-up device in step a) is preferably chosen such that the adhesive used for the glue composition to attach the ion exchange material to the solid support is not soluble in the sample. Preferably, the method of the third aspect is used for purifying an analyte from a sample.

Preferably, for step a) the sample is added to the sample clean-up device, i.e., to the solid support comprising the ion exchange resin or to the cavities/wells of the solid support comprising the ion exchange resin, and then is incubated, for example, at a temperature in the range of 1°C to 100°C, preferably in the range of 1°C to 50°C, more preferably in the range of 4°C to 25°C, e.g., at 4°C, 10°C, 15°C, 20°C, or 25°C, preferably on a shaker (for example at 100 to 1000 rpm, preferably at 400 to 800 rpm, e.g., at 600 rpm), preferably for a time period in the range of 5 to 120 minutes, preferably in the range of 10 to 60 minutes, preferably in the range of 10 to 30 minutes, for example, for 10, 15, 20, 25, or 30, preferably for 15 minutes. Depending on the ion exchange resin, the analyte to be tested, and whether the analyte should be bound to the ion exchange resin or should remain with the unbound sample material, the sample is adjusted to a certain pH such that the analyte binds to the ion exchange resin if the bound material is collected or such that the analyte does not bind to the ion exchange resin if the unbound material is collected. For example, if the analyte is GABA, the resin is Dowex^{™} 50W, preferably Dowex^{™} 50W X8; and GABA should be bound to the ion exchange resin the pH is preferably 2.5 to 3.5, more preferably between 2.7 and 3.2, and is most preferably 2.9. The pH of the sample is preferably adjusted before step a). The pH of the sample may be adjusted by adding a buffer solution to the sample before the sample is applied to the sample clean-up device. Alternatively, the sample may be added to the sample clean-up device and then the buffer solution for adjusting the pH may be added to the sample in the sample clean-up device. For example, if the sample clean-up device, i.e., the solid support comprising the ion exchange resin, is a 48-well plate the sample may have a volume in the range of 50 µl to 1000 µl, preferably in the range of 100 to 800 µl, and most preferably in the range of 150 to 500 µl. Then, a volume of buffer solution may be added to adjust the pH of the sample, for example, the volume of the buffer solution may be in the range of 0.1x to 10x, preferably in the range of 0.25x to 5x, more preferably in the range of 0.5x to 2x, and most preferably 1x the volume of the sample. In one embodiment, the buffer may also be added to the sample in solid form, for example as powder or granulate material.

In a preferred embodiment, the bound material is collected in step b). In this embodiment, preferably the analyte or part of the analyte binds to the ion exchange resin in step a). In this embodiment, the method preferably further comprises the step of washing the sample clean-up device between step a) and step b), preferably after the incubation step set forth above. The optional washing step is preferably performed such that the analyte remains bound to the sample clean-up device, i.e., to the ion exchange resin in the solid support. Thus, it is preferred that the washing solution has the same pH as the sample, in particular, as the sample after the buffer solution has been added to adjust the pH of the sample. Preferably, the washing buffer also contains a detergent, for example, to remove proteins. The washing solution may also be distilled water, for example, if a 48-well plate is used as solid support 1 ml distilled water may be added per well for washing after the sample has been removed. Preferably, the sample fluid (all the material of the sample that is not bound to the sample clean-up device, i.e., to the ion exchange resin) is removed before washing, for example, by pipetting off, aspirating off, or decanting the sample fluid. Washing is preferably performed by adding the washing solution to the sample clean-up device, i.e., the solid support comprising the ion exchange resin or the cavities/wells of the solid support, and optionally incubating the sample clean-up device with the washing solution, for example, for a time period in the range of 1 to 30 minutes, preferably in the range of 2 to 20 minutes, preferably in the range of 5 to 15 minutes, for example, for 5, 10, or 15 minutes, preferably on a shaker, for example at 100 to 1000 rpm, preferably at 400 to 800 rpm, e.g., at 600 rpm, and removing the washing solution. The optional washing step is preferably performed at least once, more preferably twice, but may also be performed more than 2 times, e.g., 3, 4, 5, 6, or more times.

In the embodiment, in which the bound material, preferably including the analyte, is collected in step b), it is preferred that the part of the sample which is not bound to the sample clean-up device, i.e., to the solid support comprising the ion exchange resin, is removed as specified above, and another aliquot of the same sample is added to the solid support, optionally after washing the solid support. This may be performed repeatedly, for example, 2, 3, 4, 5, 6, 7, 8, 9, 10, or more times. This procedure is assumed to result in accumulation of analyte on the ion exchange resin.

In a preferred embodiment, collecting the bound material in step b) from the sample clean-up device is achieved by incubating the sample clean-up device with a buffer having a pH different from that used in step a), i.e., with an elution buffer. For example, if the analyte is GABA, the resin is Dowex^{™} 50W, preferably Dowex^{™} 50W X8, and GABA is bound to the ion exchange resin the pH of the elution buffer is preferably between pH 5 and pH 6 and is most preferably about pH 5.5. Preferably, the bound material is collected from the sample clean-up device after washing as described above. In a preferred embodiment, the volume of the elution buffer used to collect, i.e., to elute, the bound material from the ion exchange resin is less than the volume of the sample applied to the sample clean-up device, for example, the volume of the elution buffer may be in the range of 0.01 x to 0.9x the volume of the sample, e.g., 0.01x, 0.05x, 0.1x, 0.2x, 0.3x, 0.4x, 0.5x, 0.6x, 0.7x, 0.8x, 0.9x the volume of the sample. For example, if step a), i.e., incubating the sample with the sample clean-up device, is performed repeatedly, e.g., 10 sample aliquots à 100 µl are incubated with the sample clean-up device or the same cavity/well of the sample clean-up device, i.e., the sample volume is 1000 µl, elution may be performed, for example, using 10 to 900 µl elution buffer. By this approach, the sample is not only purified but the purified sample, preferably including the analyte, is also concentrated. However, in certain embodiments, the volume used for collecting the bound material, e.g., eluting the bound material, may also be higher than the volume of the sample applied, for example 1.5x, 2x, 2.5x, 3x, 4x, or 5x the sample volume. Optionally, the collected bound material, i.e., the purified sample, may be further processed, for example, the material may be concentrated by methods known in the art, e.g., using commercially available concentration columns or evaporation.

In another embodiment of this aspect of the present invention, the material which is not bound to the ion exchange resin, i.e., the unbound sample material, is collected in step b). In this embodiment, preferably the analyte does not bind to a significant extent to the ion exchange resin at the chosen conditions, e.g., at the chosen salt and pH conditions. In this embodiment, compounds and material that bind to the sample clean-up device are removed from the sample, and thus, the sample is purified. Optionally, the collected unbound material, i.e., the purified sample, may be further processed, for example, the material may be concentrated by methods known in the art, e.g., using commercially available concentration columns or evaporation.

In another embodiment, both the unbound and the bound material are collected in step b). In this embodiment, the analyte may be present in the bound or in the unbound material of the sample, and is preferably only present to a significant extent in one of the fractions, i.e., in either the unbound or the bound material. If the sample comprises more than one analyte, one analyte may be present in the bound material and another analyte may be present in the unbound material. In this embodiment, the unbound material may be collected first as described above and then the bound material, optionally after washing and/or repeated application of sample aliquots, may be collected as described above.

In a fourth aspect, the present invention provides a method for analyzing a sample for the presence of an analyte, said method comprising:
a) purifying the sample by the method according to the third aspect of the present invention, and
b) applying the collected material to an analyte-specific detection assay.

Preferably, the analyte-specific detection assay is selected from the group consisting of an immunoassay, preferably ELISA or Western blot, or a nucleic acid detection method. The skilled person is well aware of nucleic acid detection methods, for example, the nucleic acid detection method may be based on sequence-specific amplification, sequencing of the nucleic acid, or sequence-specific hybridization as described above.

In a particularly preferred embodiment, the sample is a bodily fluid, preferably plasma, serum, or urine, most preferably plasma or urine, the analyte is an amino acid, preferably GABA or glutamate, and the analyte-specific detection assay is an immunoassay, preferably an ELISA, preferably a GABA-specific ELISA or a glutamate-specific ELISA.

The present inventors surprisingly found that treating ion exchange resin with a glue composition does not significantly corrupt the resin's ion exchange performance, however, allows for the preparation of ion exchange plates which are much easier to handle and more cost effective and easier in their production than conventional ion exchange columns, and are perfectly suitable for high throughput applications. Thus, the present invention provides a valuable improvement to existing approaches for sample preparation based on ion exchange chromatography, in particular, with respect to high throughput applicability, cost-effective production, and convenient and flexible handling.

### EXAMPLES

The Examples are designed in order to further illustrate the present invention and serve a better understanding. They are not to be construed as limiting the scope of the invention in any way.

### Example 1: Preparation of a sample clean-up device

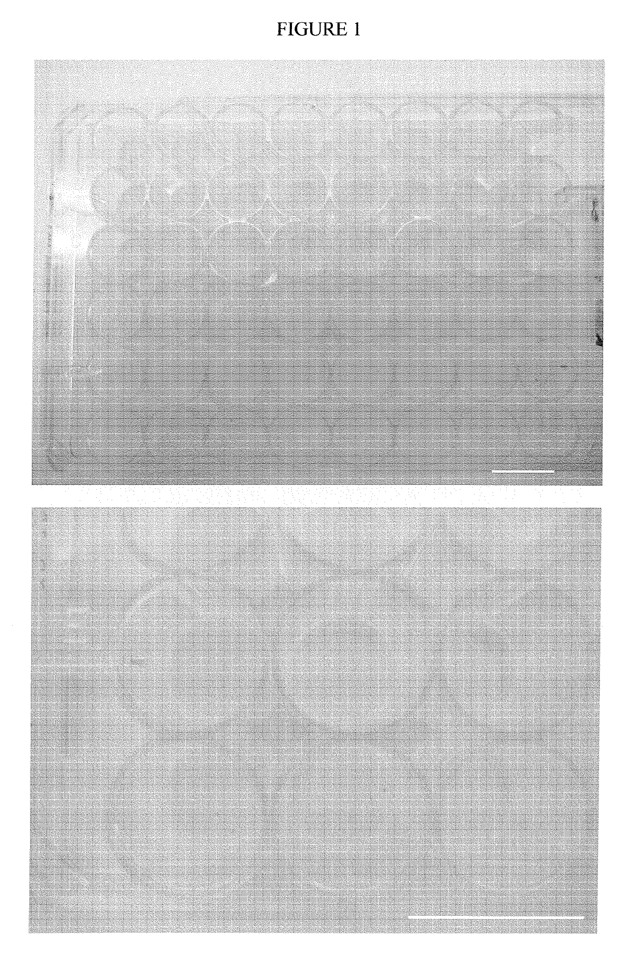

DOWEX^{™} 50W X8 (X2 or X4), 200-400 mesh was dried until the weight was stable, i.e., until all water had been evaporated. The resin was weighed. 300 g of resin has been washed once for 15 min with 3000 ml of 1 M sodium hydroxide solution. The resin was harvested by centrifugation at 500 U/min. Then the resin was washed with distilled water until the pH of the water used for washing the resin was neutral. The resin was filtered under vaccum and dried until the percentage of water was 20 to 60%. This resin was designated "activated resin". The activated resin was added to a glass flask and 387 ml glue composition (36.8 g Pattex^{®} Transparent (PXT) / 90 ml chloroform / 260 ml acetone) was added to the activated resin. The mixture was stirred for a couple of minutes and then 50 µl of said mixture were added to each well of a 48-well plate. The plate was dried overnight. After drying, the plate was first washed twice with 1.0 ml per well 0.5 M sodium chloride solution and then twice with distilled water. The plate was dried overnight (Figure 1).

### Example 2: Comparison between the sample clean-up device of the present invention and conventional column purification in a GABA analysis assay.

This experiment was performed to compare the performance of the sample clean-up device according to the present invention to the performance of a conventional ion exchange column purification of a sample for analysis of GABA using a GABA-specific ELISA.

GABA standards (urine: 0; 75; 250; 750; 2500; 7500 ng/mL / plasma: 0; 15; 50; 150; 500; 1500 ng/mL) were prepared. 100 µl of GABA urine standards and urine samples were applied to the wells of the sample clean-up device of Example 1. 100 µl of dilution buffer (0.75 M citrate buffer pH 2.9) were added to the wells of the sample clean-up device and the plate was incubated for 15 minutes on a shaker (approximately 600 rpm) at room temperature. The plate was decanted and blotted dry on paper towels and each well was washed with 500 µl of distilled water for 5 minutes on a shaker at room temperature. The bound material was removed from the sample clean-up device by adding 400 µl elution buffer (0.05 M citrate buffer, pH 5.5, incubation time = 10 min). 100 µl of the eluate were used for subsequent experiments, i.e., the GABA-specific ELISA assay.

The same protocol also applies to plasma and serum samples, however, 300 µl of sample and dilution buffer per well are used.

The column purification was performed with conventional ion exchange columns containing 500 µl Dowex^{™} SOW X4 slurry per column according to the manufacturer's instructions (GABA ELISA für Urin - Kurzanleitung: LDN GmbH & Co. KG, Nordhorn Germany). In brief, 300 µl of standards and samples were mixed with 300 µl dilution buffer (0.75 M citrate buffer, pH 2.9). 500 µl of said mixture were applied to the ion exchange columns. The columns were washed with 1.0 ml distilled water and 2.0 ml washing buffer. Bound material was eluted with 1 ml elution buffer. 200 µl of the eluate were used for the subsequent GABA-specific ELISA assay.

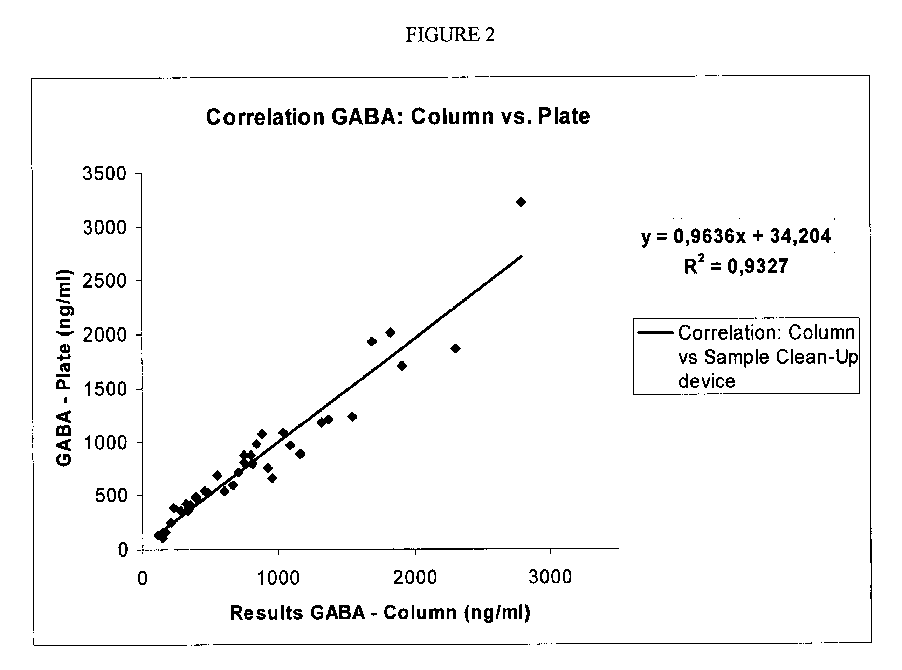

The eluates were applied to a conventional GABA-specific ELISA assay which was performed according to the manufacturer's instructions. The results are shown in Table 1 and in Figure 2.

**Table 1: Comparison of column extraction versus plate extraction in sample preparation for a GABA specific analysis assay**

| | GABA [ng/ml] | |
|---|---|---|
| Urine sample # | Column | Plate |
| 1 | 1043 | 1081 |
| 2 | 1832 | 2016 |
| 3 | 1692 | 1938 |
| 4 | 2789 | 3223 |
| 5 | 1542 | 1235 |
| 6 | 663 | 590 |
| 7 | 707 | 721 |
| 8 | 391 | 487 |
| 9 | 336 | 361 |
| 10 | 597 | 543 |
| 11 | 844 | 981 |
| 12 | 1909 | 1712 |
| 13 | 1372 | 1201 |
| 14 | 459 | 545 |
| 15 | 352 | 414 |
| 16 | 322 | 425 |
| 17 | 284 | 354 |
| 18 | 1095 | 972 |
| 19 | 549 | 687 |
| 20 | 919 | 752 |
| 21 | 483 | 525 |
| 22 | 951 | 659 |
| 23 | 812 | 794 |
| 24 | 229 | 387 |
| 25 | 748 | 811 |
| 26 | 208 | 250 |
| 27 | 341 | 381 |
| 28 | 879 | 1078 |
| 29 | 744 | 875 |
| 30 | 1322 | 1186 |
| 31 | 114 | 130 |
| 32 | 169 | 156 |
| 33 | 147 | 156 |
| 34 | 800 | 875 |
| 35 | 147 | 107 |
| 36 | 2310 | 1872 |
| 37 | 1167 | 885 |
| 38 | 166 | 164 |
| 39 | 395 | 477 |

This experiment shows that the sample clean-up device of the present invention is equally well suited for preparing and purifying a sample for an analysis method, such as an immunoassay, e.g., ELISA, as conventional ion exchange column purification, while the sample clean-up device is much more cost-effective and easier in its production and handling, and allows for analysis in a high throughput setting.

## Claims

1. A sample clean-up device comprising a solid support and an ion exchange resin, wherein the ion exchange resin is attached to the solid support with a glue composition.

2. A method for preparing a sample clean-up device, said method comprising:
a) mixing ion exchange resin with a glue composition,
b) adding the mixture of a) to a solid support, and
c) drying the mixture of a) in the solid support.

3. The sample clean-up device of claim 1 or the method of claim 2, wherein the solid support is in the form of a multiwell plate.

4. The sample clean-up device or the method of any one of claims 1 to 3, wherein the glue composition comprises one or more adhesives and one or more solvents, preferably one or more organic solvents.

5. The sample clean-up device or the method of claim 4, wherein the one or more solvents are inert.

6. The sample clean-up device or the method of claim 4 or 5, wherein the one or more adhesives are selected from the group consisting of natural adhesives, synthetic monomer adhesives, and synthetic polymer adhesives.

7. The sample clean-up device or the method of any one of claims 1 to 6, wherein the glue composition comprises an adhesive, chloroform, and acetone.

8. A method for purifying a sample, said method comprising:
a) incubating the sample with the sample clean-up device of any one of claims 1 or 3 to 7, and
b) collecting the bound material, the unbound material, or both from the sample clean-up device.

9. A method for analyzing a sample for the presence of an analyte, said method comprising:
a) purifying the sample by the method of claim 8, and
b) applying the collected material to an analyte-specific detection assay.

10. The method of claim 9, wherein the analyte-specific detection assay is selected from the group consisting of immunoassay and nucleic acid detection method.

11. The method of any one of claims 8 to 10, wherein the sample is a biological sample, preferably a bodily sample, an environmental sample, or a food sample.

12. The method of claim 11, wherein the bodily sample is a bodily fluid, a cell extract, or a tissue extract.

13. The method of any one of claims 8 to 12, wherein the sample is urine, serum, or plasma, preferably urine.

14. The method of any one of claims 9 to 13, wherein the analyte is selected from the group consisting of hormones, neurotransmitters, enzymes, signaling molecules, receptor ligands, second messenger molecules, toxins, pathogen-specific molecules, metabolites, and coenzymes.

15. The method of any one of claims 9 to 14, wherein the analyte is selected from the group consisting of amino acids, metabolites of amino acids, biogenic amines, peptides, proteins, nucleobases, nucleosides, nucleotides, nucleic acids, saccharides, oligosaccharides, lipids, glycolipids, steroids, and derivatives thereof, and is preferably y-aminobutyric acid (GABA) or glutamate.
